# EUROPÄISCHE PATENTSCHRIFT

(11) **EP 1 160 500 B1**
(45) Veröffentlichungstag und Bekanntmachung des Hinweises auf die Patenterteilung: **18.01.2006**
(21) Anmeldenummer: 01110911.3
(22) Anmeldetag: 05.05.2001
(51) Int. Cl.: F16P 1/00, G10K 11/16

(54) **Abschirmvorrichtung**
Shield device
Dispositif d'écran

(30) Priorität: 29.05.2000 DE 10026415
(43) Veröffentlichungstag der Anmeldung: 05.12.2001
(73) Patentinhaber: Voith Paper Patent GmbH, 89522 Heidenheim (DE)
(72) Erfinder: Begemann, Ulrich, 89522 Heidenheim (DE); Feiler, Bruno, 89564 Nattheim (DE); Eckl, Werner, 89429 Bachagel (DE)

(56) Entgegenhaltungen:
- WO-A-96/34145
- DE-A- 4 237 673
- FR-A- 1 490 216
- FR-A- 2 778 781
- US-A- 5 060 752
- US-A- 5 865 119

## Beschreibung

Die Erfindung betrifft eine Vorrichtung zur Abschirmung der Umgebung gegen prozessbedingte Abspritzungen und Lärm im Bereich wenigstens eines Prozessabschnittes einer Maschine zur Herstellung, Veredelung und/oder Verarbeitung einer laufenden Materialbahn.
Bei der Materialbahn kann es sich um eine Papier-, Karton-, Textil-, Folien- o.a. -Bahn handeln.
Insbesondere aber ist die Abschirmvorrichtung geeignet für eine Papiermaschine, beispielsweise im Bereich des Stoffauflaufes und/oder Formers und/oder der Pressenpartie, mit wenigstens einer Abschirmwand, die an Quer- und/oder Längstraversen des Maschinengestells der Maschine angebracht ist.

Die heute arbeitenden Papiermaschinen weisen einen hohen Automatisierungsgrad auf, weil eine höhere Mengenproduktion bei gleichmäßiger oder ebenfalls noch höherer Papierqualität gefordert ist.

Aufgrund schärferer Umweltschutzgesetze für Luft, Wasser, Lärm usw. ist es bei Umbauten oder Neuinvestitionen von Papiermaschinen deshalb erforderlich auch entsprechende Technologien vorzusehen, mit denen die Umgebung der Papiermaschine besser als bisher von ungewollten Prozesseinflüssen geschützt werden kann.

Aus der DE 42 37 673 A1 ist eine Wickelmaschine zum Aufwickeln von Papier- oder Kartonbahnen bekannt.
In dieser Druckschrift sind vor und hinter den Lärm - verursachenden Wickelstellen sowohl quer zur Bahnlaufrichtung und sich über die Maschinenbreite erstreckende senkrechte Rolltore, als auch an zumindest einer Längsseite der Maschine ein oder mehrere solcher Rolltore offenbart.
Die Rolltore bestehen aus einem biegsamen, schalldämmenden Material, insbesondere durchsichtiger PVC - Folie von mindestens 4 mm Stärke.

Diese Rolltore lassen sich öffnen und schließen und sind an Längs- oder Quertraversen des Maschinengestells befestigt.
Um den Geräuschaustritt auch nach oben zu vermindern, ist die Wickelmaschine oben durch aufliegende, schalldämmende Platten abgeschlossen und somit der gesamte Wickelbereich geräuschmindemd abgekapselt.
Diese Art der Abkapselung ist aber nur dort anwendbar, wo keine prozessbedingten Abspritzungen durch Wasser, Luft und Stoffgemische, wie es beispielsweise beim Stoffauflauf auf Grund der dort herrschenden Turbulenzen oder im Bereich von Siebpartie und Pressenpartie beim Auspressen der nassen Materialbahn der Fall ist, auftreten.
Unter solchen Bedingungen würden die Rolltore so stark verschmutzen, dass deren Durchsichtigkeit und auch der Rollbetrieb schon nach kurzer Zeit nicht mehr möglich wäre.
Es soll noch erwähnt werden, dass es aus der Praxis bekannt ist, im Bereich der Trockenpartie eine, die ganze Trockenpartie umfassende Trockenhaube zu installieren. Im Durchlaufverfahren werden dort die Papierbahnen getrocknet und auf die gewünschte Qualität und Festigkeit gebracht . Dafür wird die Bahn von beheizten Zylindem erwärmt und mit Luftstrahlen angeblasen. Außerdem wird meistens auf die Bahn noch Leim aufgebracht, um erforderliche Qualitätsmerkmale des Papieres oder Kartons zu erfüllen.
Wegen der hohen Temperaturen beim Trocknungsvorgang und des freigesetzten Dampfes werden die Papiermaschinen in diesem Bereich mit ringsum geschlossenen, begehbaren Dunsthauben (auch als Trockenhauben bezeichnet) abgedeckt. Damit werden einerseits Wärmeverluste reduziert und andererseits die Bausubstanz der Papiermaschinenhalle sowie das Bedienungspersonal vor Hitze und Dampf geschützt. Eine solche Abdeckung ist natürlich enorm aufwändig herstellbar und teuer.

Aus der WO 96/34145, siehe Oberbegriff des Anspruchs 1, ist eine Haube für die Sieb- und die Pressenpartie einer Papier- oder Kartonmaschine bekannt.
Die offenbarte Haube besteht aus einzelnen Wand- und Deckenelementen, welche eine geschlossene Haube um die Siebpartie und/oder die Pressenpartie bilden.

Die Wand- und Deckenelemente bestehen jeweils aus Außen- und Innenwänden und sind derart zusammengesetzt, so dass zwischen diesen Wänden ein Luftkanal ver bleibt zum Durchleiten eines Luftflusses in das Innere der Papiermaschinenpartie. Dazu sind in der inneren Wand entsprechende Durchtrittsöffnungen bzw. Perforationen enthalten.
Einzelne Wandelemente sind dabei als Tore, Türen oder Fenster ausgebildet.
Auf der Bedienseite sind die Wandelemente in Längsrichtung der Maschine verschiebbar. Auf der Antriebseite sind die Wandelemente stationär ausgebildet und in die großen Wandelemente kleinere Türen eingearbeitet
Die innere Wand besteht aus Blech und ist vorzugsweise aus nichtrostendem Material gefertigt, welches sich leicht reinigen und auch verstärken lässt.
Die untere Ftäche der Deckenwand ist beispielsweise beschichtet mit Teflon. Die Außenwand der Haube besteht aus Blech, z.B. Aluminium und ist nach innen isoliert mit Glaswolle.
Die Dicke der ganzen Wandkonstruktion beträgt zwischen 300 und 500 mm. Auf Grund dieser Größe der Wandelemente sind diese Teile natürlich recht schwer und lassen sich nur mit Hilfe von Hebezeugen an- und abbauen sowie nur in gewissem Maße hin- und her bewegen.

Die Aufgabe der vorliegenden Erfindung besteht darin, eine einfacher aufgebaute und dennoch wirksame Abschirmung zu schaffen.

Erfindungsgemäß wird die Aufgabe der Erfindung durch die im Kennzeichen des Anspruches 1 angegebenen Merkmale gelöst. Weitere vorteilhafte Ausgestaltungsmerkmale ergeben sich aus den Unteransprüchen.

Eine einzelne erfindungsgemäße, aus strukturiertem, d.h. in Leichtbauweise wie z.B. in Sandwichbauweise aus einer Blechkonstruktion gefertigte Abschirmwand wiegt nur ca. 30 kg und lässt sich von nur einer einzigen Arbeitskraft handhaben. Hebezüge sind somit für das Bewegen bzw. Verschieben der Abschirmwände nicht erforderlich. In überraschender Weise hat sich in Versuchen herausgestellt, dass wenn die erfindungsgemäßen Abschirmwände direkt am Ort des Entstehens von Lärm, Dampf, Wasser usw. angebracht werden, man mit den nur sehr einfach ausgebildeten und leicht herstellbaren Abschirmwänden einen effektiven Spritz- und Lärmschutz gewährleisten kann.

Der besondere Vorteil der erfindungsgemäßen Abschirmwände und der Art ihrer Anbringung an den jeweils gewünschten Prozessabschnitten der jeweiligen Maschine besteht aber darin, dass sich diese vor allem für Nachrüstungen an einer bereits bestehenden Maschine eignen. Eine solche Art Nachrüstung ist effektiv und dennoch wenig kostenintensiv.

Nachfolgend soll die Erfindung anhand eines Ausführungsbeispieles näher erläutert werden:
- Figur 1 zeigt: in perspektiver, schematischer Darstellung einzelne Produktionsabschnitte am Beispiel einer Papiermaschine mit der Anordnung der erfindungsgemäßen Abschirmwände von der Bedienseite aus gesehen.
- Figur 2 zeigt: die Seitenansicht der erfindungsgemäßen Abschirmwände im Schnitt.

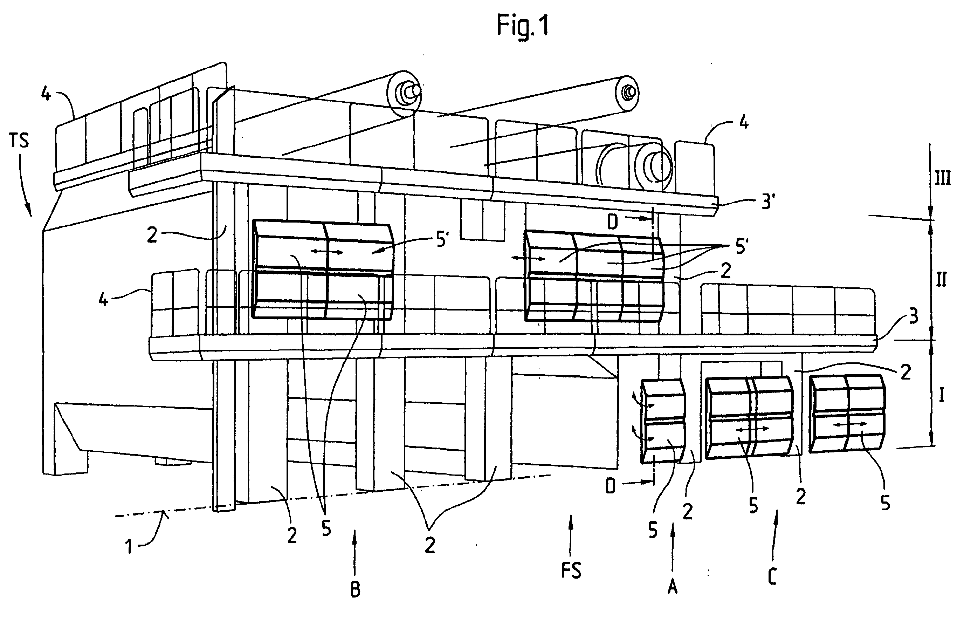

Figur 1 zeigt einen Teil einer im Beispiel gewählten Papiermaschine von der Bedienseite (Führerseite FS) her aus gesehen mit den Produktionsabschnitten A, B, C, wobei A den Stoffauflauf (headbox, welcher z. B. als "Module Jet" vertrieben wird) darstellen soll. In diesem Bereich herrschen hohe Turbulenzen durch das einschießende Stoffgemisch. Mit B ist der Former, also der Bereich der auf Sieben erfolgenden Blattbildung (Siebpartie), gekennzeichnet. Es schließt sich der Bereich C, d. h. die Pressenpartie (in der Figur 1 aber nicht im einzelnen dargestellt) an. In dieser Pressenpartie wird ein hohes Maß an Feuchtigkeit mittels Press- und Saugwalzen aus der schon gebildeten Bahn herausgepresst. Abspritzungen und auch Lärmbelästigungen gilt es deshalb hier zu vermeiden bzw. zu vermindem.

Mit 1 ist das sogenannte Fundament der Papiermaschine bezeichnet und ist in strichpunktierter Linie dargestellt.
Das Maschinengestell 2 bestehend aus Quer- und Längstraversen und nimmt entsprechende Laufgitter 3 und Haltegeländer 4 für das Bedienerpersonal auf.
Um jene freien Stellen, an denen der größte Lärm sowie die prozessbedingten Abspritzungen erwartet werden sicher abschirmen zu können, sind Abschirmwände 5 vorgesehen.

Wie mit Doppelpfeilen dargestellt, sind die Abschirmwände 5 in Maschinenlängsrichtung - ähnlich einer Gardine - leicht und unkompliziert zu verschieben. Dazu sind nicht näher dargestellte Längsfahrbahnen, an denen vorzugsweise der obere Teil der Wände 5 befestigbar ist, vorhanden. Das Verschieben ist sinnvoll, um in das Innere der Maschine im Bedarfsfall zu gelangen, oder auch das Innere beobachten zu können. Das Verschieben ist außerdem sinnvoll, um die Wände 5 zu einer vollflächigen Abschirmung zusammenschieben zu können. Das Zusammenschieben und /oder das Verschieben kann beliebig lang, d.h. entlang der Längsrichtung an der Bedienseite der Papiermaschine ausgeführt werden.

Verbunden werden die einzelnen Wände miteinander über labyrinthartig ausgebildete, stirnseitige, ebenfalls nicht in der Figur gesondert dargestellte Formschlussteile, wodurch eine ausreichende Dichtfläche gegeben ist.

Die gebogen gezeichneten Doppelpfeile sollen andeuten, dass die Abschirmwand 5, insbesondere eine schmalere Wand, auch als zu öffnende Tür ausgebildet sein kann.

Wie außerdem aus der **Figur 1** zu entnehmen ist, sind im gewählten Beispiel die Abschirmwände in der begehbaren Ebene 1 und 11 angeordnet. Die Ebene I erstreckt sich vom Fundament bis zur ersten Bedienbühne, die Ebene II von der ersten Bedienbühne 3 zur zweiten Bedienbühne bzw. Laufgitter 3'. Die Ebene II erstreckt sich von Bühne 3' nach oben aus.

Es versteht sich, dass nach Größe der Maschine z. B. bei Pilotmaschinen nur eine einzelne Abschirmwand vorgesehen sein kann. Meistens ist es aber doch notwendig, bei Produktionsmaschinen, mehrere Wände miteinander zu verbinden und somit eine großflächige und sich auch über einen oder mehrere benachbarte Prozessabschnitte aufzubauen - in der **Figur 1** ist das bei Abschnitt C mit der sich erstreckenden Abschirmung 5' angedeutet.

Diese vollflächige, über mehrere Bereiche erstreckbare, auch wieder leicht entfernbare Abschirmung ist erstmals mit den erfindungsgemäßen, leichten Profilwänden 5 möglich. Eine uneingeschränkte Bedienbarkeit der Maschine ist dabei zu jeder Zeit gegeben.

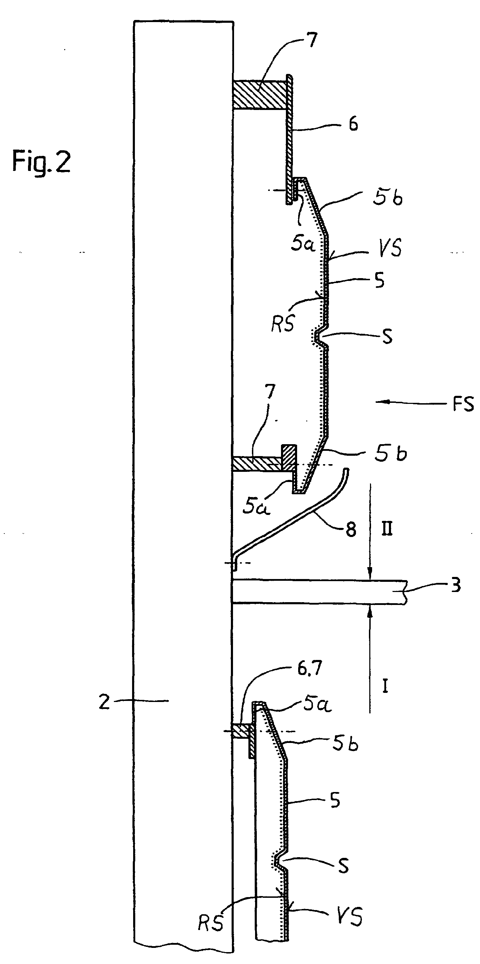

In **Figur 2** ist im Schnitt entlang der Linie D-D aus **Figur 1** je eine Wand in Bediener-Ebene I und Bediener-Ebene II der Papiermaschine dargestellt.
Die jeweilige Abschirmwand 5 ist aus dünnwandigem Material wie Aluminiumblech, Kunststoff for Verbundwerkstof mit einer Stärke von 2 bis 5 mm gefertigt.
Die Innenseite bzw. Rückseite RS ist mit einem schallisolierenden Material versehen. Dieses Material kann ebenfalls wie beim Stand der Technik aus leicht zu reinigendem Teflon oder aber auch aus einem schmutzunempfindlichen Werkstoff bestehen. Die Rückseite RS der Abschirmwand 5 lässt sich damit verkleiden oder wird in Form eines Anstriches ausgeführt.
Das schallisolierende und/oder schmutzunempfindliche Material ist in **Figur 2** gepunktet dargestellt.

Die Abschirmung 5 bzw. 5' ist in einem Abstand bis ca. 0,8m zur Maschinenlängsseite außerhalb der Maschinenstuhlung angebracht. Dieser Abstand ist optimal für die Gewährleistung des Schall- und Spritzschutzes (hierzu sind enge Anordnungen in Bauteilnähe wünschenswert) und ist darüber hinaus ausreichend groß für eine Begehbarkeit der Maschine.

Es soll noch erwähnt werden, dass die Anbringung der Abschirmwand sowohl an der Bedienseite (Führerseite) FS als auch an der Antriebseite (Triebseite) TS vorgesehen ist, dies aber auch nur an einer der beiden Seiten möglich ist.

Die Abmaße einer einzelnen Wand betragen maximal. 1,20 m x 1,60 m und sind daher für eine Bedienkraft leicht handhabbar, zumal das Gewicht einer Wand nur ca. 30 kg beträgt. Auf Grund des speziellen Profiles der Wände mit der in der Vorderseite VS eingearbeiteten Sicke S ist Formstabilität gegeben.

Zur weiteren Erhöhung der Formsteifigkeit ist jede Wand an ihrem unteren und oberen Randbereich 5b leicht (um ca. 25°) nach hinten (das ist die Rückseite RS der Wand 5) abgewinkelt und weist ein nach hinten umgebogenes Ende 5a auf.
Auf Grund dieser Formgebung treten ungewollte Schwingungen nicht auf. Wie des weiteren aus **Figur 2** ersichtlich ist, sind die Wände 5 im Bereich der umgebogenen Enden 5a über Aufhängungen 6 an den Längstraversen des Maschinengestelles 2 befestigt. Zur Verschiebung in Maschinenlängsrichtung sind darüber hinaus Längsfahrbahnen 7 angedeutet, welche ebenfalls am Gestell 2 angebracht sind.

Um an der Innenwandung ablaufende Feuchtigkeit und Schmutzpartikel oder dergleichen auffangen zu können ist unterhalb der Wand 5 eine Auffangrinne 8 vorhanden.

## Patentansprüche

1. Vorrichtung zur Abschirmung der Umgebung gegen prozessbedingte Abspritzungen und Lärm im Bereich wenigstens eines Prozessabschnittes einer Maschine zur Herstellung, Veredelung und/oder Verarbeitung einer laufenden Materialbahn, insbesondere aber einer Papiermaschine, beispielsweise im Bereich des Stoffauflaufes (A) und/oder der Siebpartie (B) und/oder der Pressenpartie (C) mit einzelnen Abschirmwanden (5), die an Quer- und/oder Längstraversen des Maschinengestells der Maschine angebracht sind, wobei die einzelnen Abschirmwände (5) in beliebiger Größe zu einer vollflächigen Abschirmung (5') derart ausgebildet sind, dass diese Abschirmung (5') über einen Prozeßabschnitt und gewünschtenfalls durchgangig über mehrere aufeinanderfolgende Prozessabschnitte (A, B, C) reicht,
**dadurch gekennzeichnet, dass** zur Abschirmung (5') miteinander verbundene Abschirmwände (5) in Maschinenlängsrichtung verschiebbar sind, wobei die Abschirmwände (5) aus einem dünnwandigen Leichtbau-Profil, insbesondere aus Kunststoff, gefertigt sind und auf ihrer Vorderseite (VS) eine mittige, horizontal ausgerichtete Sicke (S) aufweisen.

2. Vorrichtung nach Anspruch 1,
**dadurch gekennzeichnet, dass**
die Abschirmwand (5) bzw. die Abschirmwände (5) auf ihrer Innenseite mit einem schallisolierenden und/oder schmutzunempfindlichen Material versehen ist/sind.

3. Vorrichtung nach Anspruch 1 und 2
**dadurch gekennzeichnet, dass**
einzelne Abschirmwände (5) nach Art einer Labyrinthdichtung formschlüssig miteinander in Maschinenlängsrichtung zur vollflächigen Abschirmung (5') miteinander verbindbar sind.

4. Vorrichtung nach Anspruch 1 bis 3,
**dadurch gekennzeichnet, dass**
die einzelnen Abschirmwände (5) aufklappbar ausgebildet sind.

5. Vorrichtung nach einer oder mehreren der vorangehenden Ansprüche
**dadurch gekennzeichnet, dass**
die Abschirmwand (5) oder die vollflächige Abschirmung (5') im begehbaren Abstand zur Längsseite des jeweiligen Prozessabschnittes (A, B, C) und damit im Abstand zum Maschinengestell angeordnet ist.

6. Vorrichtung nach Anspruch 5
**dadurch gekennzeichnet, dass**
die Abschirmwand (5) oder die vollflächige Abschirmung (5') auf der Führerseite (FS) und der Triebseite (TS) der Maschine zur Herstellung oder Verarbeitung einer laufenden Materialbahn angebracht ist.

7. Vorrichtung nach einem oder mehreren der vorangehenden Ansprüche,
**dadurch gekennzeichnet, dass**
die Abschirmwand (5) an ihrem oberen und unteren Rand jeweils einen in Richtung ihrer Rückseite (RS) umgebogenen Rand (5a) aufweist, mit dem die Abschirmwand (5) über Aufhängungen (6) am Maschinengestell (2) befestigbar ist.

8. Vorrichtung nach einem oder mehreren der vorangehenden Ansprüche,
**dadurch gekennzeichnet, dass** der auf der Vorderseite (VS) der Abschirmwand (5) befindliche obere und untere Endbereich (5b) jeweils nach hinten abgeknickt ist.

9. Vorrichtung nach einem oder mehreren der vorangehenden Ansprüche,
**dadurch gekennzeichnet, dass**
unterhalb der Abschirmwand (5) eine Auffangrinne (8) angeordnet ist.

## Claims

1. Device for shielding the environment against process-induced spray and noise in the region of at least one process section of a machine for producing, finishing and/or processing a moving material web, but in particular a paper machine, for example in the region of the headbox (A) and/or the wire section (B) and/or the press section (C), having individual shielding walls (5) which are fitted to transverse and/or longitudinal cross-members of the machine frame of the machine, the individual shielding walls (5) being constructed in any desired size to form a whole-area shield (5') in such a way that this shield reaches over one process section and, if desired, continuously over a plurality of successive process sections (A, B, C), **characterized in that**, for the purpose of shielding (5'), interconnected shielding walls (5) can be displaced in the machine longitudinal direction, the shielding walls (5) being fabricated from a thin-walled lightweight profile, in particular from plastic, and having a central, horizontally oriented bead (S) on their front side (VS).

2. Device according to Claim 1, **characterized in that** the shielding wall (5) or the shielding walls (5) is/are provided on their inner side with a material which is sound-insulating and/or unaffected by soiling.

3. Device according to Claims 1 and 2, **characterized in that** individual shielding walls (5) can be connected to each other in the machine longitudinal direction by a form fit in the manner of a labyrinth seal for whole-area shielding (5').

4. Device according to Claims 1 to 3, **characterized in that** the individual shielding walls (5) can be folded up.

5. Device according to one or more of the preceding claims, **characterized in that** the shielding wall (5) or the whole-area shield (5') is arranged at a walkable distance from the long side of the respective process section (A, B, C) and therefore at a distance from the machine frame.

6. Device according to Claim 5, **characterized in that** the shielding wall (5) or the whole-area shield (5') is fitted to the operator side (FS) and the drive side (TS) of the machine for producing or processing a moving material web.

7. Device according to one or more of the preceding claims, **characterized in that**, at its upper and lower edge, the shielding wall (5) has an edge (5a) bent over in the direction of its rear side (RS) in each case, with which the shielding wall (5) can be fixed via suspension means (6) on the machine frame (2).

8. Device according to one or more of the preceding claims, **characterized in that** the upper and lower end region (5b) located on the front side (VS) of the shielding wall (5) is in each case bent over rearwards.

9. Device according to one or more of the preceding claims, **characterized in that** a connecting channel (8) is arranged underneath the shielding wall (5).

## Revendications

1. Dispositif pour protéger l'environnement contre des projections et du bruit provenant des processus dans la région d'au moins une section de processus d'une machine de fabrication, ennoblissement et/ou traitement d'une bande de matériau en mouvement, mais en particulier d'une machine à papier, par exemple dans la région de la caisse de tête (A) et/ou de la section humide (B) et/ou de la section de pressage (C), comprenant des parois d'écran individuelles (5) qui sont montées sur des traverses transversales et/ou longitudinales du bâti de la machine, les parois d'écran individuelles (5) étant réalisées avec une taille quelconque pour fournir un écran de grande surface (5') de telle sorte que cet écran (5') s'étende sur une section de processus et de manière souhaitable sous forme continue sur plusieurs sections de processus successives (A, B, C),
**caractérisé en ce que** des parois d'écran (5) connectées les unes aux autres pour former l'écran (5') peuvent être déplacées dans la direction longitudinale de la machine, les parois d'écran (5) étant fabriquées en un profilé de construction légère à paroi mince, notamment en plastique, et présentant sur leur côté avant (VS) une moulure (S) centrale, orientée horizontalement.

2. Dispositif selon la revendication 1,
**caractérisé en ce que**
la paroi d'écran (5) ou les parois d'écran (5) est ou sont pourvue(s) sur leur côté intérieur d'un matériau insonorisant et/ou insensible aux salissures.

3. Dispositif selon les revendications 1 et 2,
**caractérisé en ce que**
des parois d'écran individuelles (5) peuvent être connectées les unes aux autres à la manière d'un joint à labyrinthe par engagement positif les unes avec les autres dans la direction longitudinale de la machine pour fournir un écran (5') de grande surface.

4. Dispositif selon les revendications 1 à 3,
**caractérisé en ce que**
les parois d'écran individuelles (5) sont réalisées de manière rabattable.

5. Dispositif selon l'une quelconque ou plusieurs des revendications précédentes,
**caractérisé en ce que**
la paroi d'écran (5) ou l'écran de grande surface (5') est disposé(e) à distance praticable du côté longitudinal de la section de processus respective (A, B, C) et de ce fait à distance du bâti de la machine.

6. Dispositif selon la revendication 5,
**caractérisé en ce que**
la paroi d'écran (5) ou l'écran de grande surface (5') est monté(e) sur le côté de commande (FS) et le côté d'entraînement (TS) de la machine de fabrication ou de traitement d'une bande de matériau en mouvement.

7. Dispositif selon l'une quelconque ou plusieurs des revendications précédentes,
**caractérisé en ce que**
la paroi d'écran (5) présente sur son bord supérieur et son bord inférieur à chaque fois un bord recourbé (5a) dans la direction de son côté arrière (RS), avec lequel la paroi d'écran (5) peut être fixée sur un bâti de machine (2) par le biais d'accrochages (6).

8. Dispositif selon l'une quelconque ou plusieurs des revendications précédentes,
**caractérisé en ce que**
la région d'extrémité supérieure et inférieure (5b) se trouvant sur le côté avant (VS) de la paroi d'écran (5) est à chaque fois coudée vers l'arrière.

9. Dispositif selon l'une quelconque ou plusieurs des revendications précédentes,
**caractérisé en ce que**
l'on dispose une gouttière de collecte (8) sous la paroi d'écran (5).
